# EUROPEAN PATENT APPLICATION

(11) **EP 4 764 267 A1**
(43) Date of publication of application: **24.06.2026**
(21) Application number: 24854133.6
(22) Date of filing: 02.08.2024
(51) Int. Cl.: F16J 15/3204, F16J 15/3252

(54) **SEALING DEVICE**

(30) Priority: 14.08.2023 JP 2023132062
(71) Applicant: NOK Corporation, Minato-ku Tokyo 105-8585 (JP); National University Corporation Saitama University, Saitama City, Saitama 338-8570 (JP)
(72) Inventor: HANADA, Yuki, Fujisawa-shi, Kanagawa 251-0042 (JP); SAKAI, Yohei, Fujisawa-shi, Kanagawa 251-0042 (JP); SATO, Hiroyuki, Fujisawa-shi, Kanagawa 251-0042 (JP); TADOKORO, Chiharu, Saitama-shi, Saitama 338-8570 (JP)
(74) Representative: Global IP Europe Patentanwaltskanzlei
(86) International application number: PCT/JP2024/027787
(87) International publication number: WO 2025/037543

(57) **Abstract**

A sealing apparatus for sealing a gap between two members configured to rotate relative to each other about an axis includes a metal ring configured to be fixed to one member of the two members and having a shape of an annulus configured to be disposed around the axis, and an elastic body supported by the metal ring and having a shape of an annulus configured to be disposed around the axis, wherein the elastic body includes an annular base joined to the metal ring and a cylindrical side lip protruding from the base and configured to be in contact with another member of the two members, and wherein an outer peripheral surface of the side lip is provided with a plurality of ribs that are arranged spaced apart from each other in a direction of a circumference having a center configured to be disposed at the axis.

## Description

### TECHNICAL FIELD

This disclosure relates to sealing apparatuses.

### BACKGROUND ART

A sealing apparatus, such as an oil seal for sealing a gap between two members configured to rotate relative to each other about an axis, may be provided with a side lip configured to be in contact with a member of the two members such as a flange that rotates, so as to enhance performance of prevention of infiltration of foreign matter, etc., through the gap.

For example, a sealing apparatus disclosed in Patent Document 1 includes a metal ring and a lip that is made of rubbery elastic material and is integrally molded together with the metal ring. A distal end of the lip, which is a contact portion, is in contact with a flange surface that rotates. According to Patent Document 1, a center of relative rotation of the contact portion is arranged eccentrically relative to a center of rotation of the flange surface. Thus, it is possible to substantially prevent generation of abnormal noise due to stick-slip caused between the flange surface and the contact portion.

### Related Art Document

### Patent Document

Patent Document 1: WO2019/039152

### SUMMARY OF THE INVENTION

### Problem to be Solved by the Invention

In the sealing apparatus disclosed in Patent Document 1, since the center of relative rotation of the contact portion of the lip is arranged eccentrically relative to the center of rotation of the flange surface, it is necessary to change a structure of the flange surface to allow relative rotation of the contact portion.

In view of the circumstances described above, an object of this disclosure is to substantially and simply prevent generation of abnormal noise due to stick-slip of a side lip to a counterpart that rotates.

### Means for Solving Problem

To solve the above problems, a sealing apparatus according to an aspect of this disclosure is a sealing apparatus or sealing a gap between two members configured to rotate relative to each other about an axis, the sealing apparatus including a metal ring configured to be fixed to one member of the two members and having a shape of an annulus configured to be disposed around the axis and an elastic body supported by the metal ring and having a shape of an annulus configured to be disposed around the axis, wherein the elastic body includes an annular base joined to the metal ring and a cylindrical side lip protruding from the base and configured to be in contact with another member of the two members, and wherein an outer peripheral surface of the side lip is provided with a plurality of ribs that are arranged spaced apart from each other in a direction of a circumference having a center configured to be disposed at the axis.

### Effects of Invention

According to this disclosure, it is possible to substantially prevent generation of abnormal noise due to stick-slip of a side lip.

### BRIEF DESCRIPTION OF THE DRAWINGS

Fig. 1 is a cross section of an apparatus in which a sealing apparatus according to a first embodiment is used.
Fig. 2 is a perspective view of a side lip of the sealing apparatus according to the first embodiment.
Fig. 3 is a schematic diagram explaining friction vibration of a side lip having no rib.
Fig. 4 is a schematic diagram explaining a state of friction between the side lip having no rib and a counterpart surface.
Fig. 5 is a schematic diagram explaining friction vibration of a side lip with ribs.
Fig. 6 is a schematic diagram explaining a state of friction between the side lip with ribs and a counterpart surface.
Fig. 7 is a perspective view of a side lip of a sealing apparatus according to a second embodiment.
Fig. 8 is a diagram showing each condition for examples 1 to 4 and a comparative example.
Fig. 9 is a schematic diagram showing an apparatus for abnormal noise tests for side lips.
Fig. 10 a diagram showing results of machine noise confirmation tests for the examples 1 to 4 and the comparative example.
Fig. 11 is a diagram showing vibration frequency spectra of side lips in the example 4 and the comparative example.

### MODES FOR CARRYING OUT THE INVENTION

Hereinafter, preferable embodiments according to this disclosure will be described with reference to the accompanying drawings. It should be noted that dimensions and scales of each of the elements shown in the drawings may differ from those of an actual element, and some elements may be shown schematically to facilitate understanding. In addition, it should be noted that in the following explanation, the scope of this disclosure is not limited to these embodiments unless the following explanation includes a description that specifically limits this disclosure.

### 1. First Embodiment

### 1-1. Sealing Apparatus

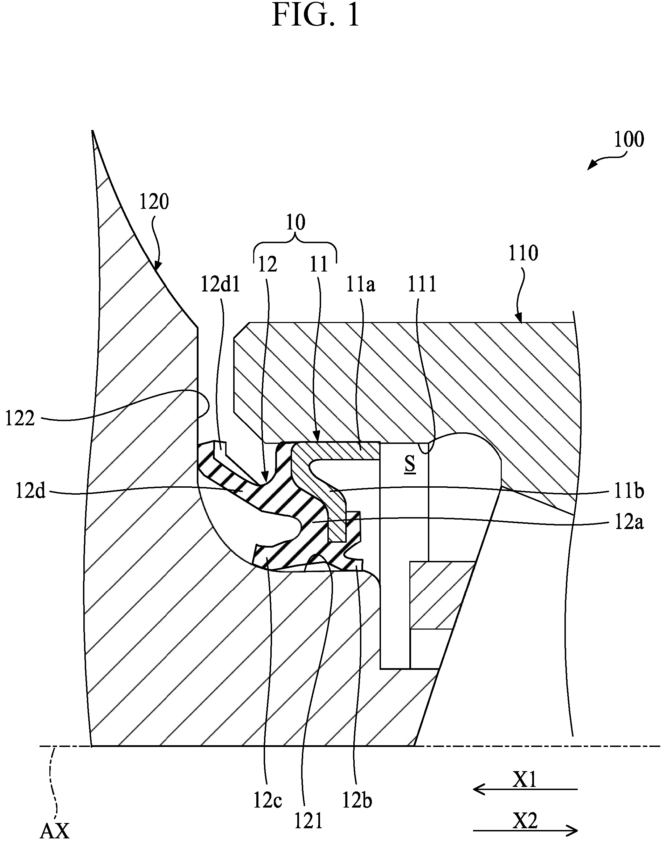

Fig. 1 is a cross section of a sealing apparatus 10 according to a first embodiment. The sealing apparatus 10 is a structure for sealing a gap S between two members 110, 120 configured to rotate relative to each other about an axis AX. In Fig. 1, the sealing apparatus 10 is shown which is in an aspect used for a mechanism such as a differential in an automobile. It should be noted that the sealing apparatus 10 is not limited to being used for a differential of an automobile, and it may be used for a differential of an apparatus other than automobiles, for example, or may be used for various types of transportation machinery, various types of construction machinery, various types of farm machinery, etc., other than differentials.

In the following, for convenience of explanation, a direction along the axis AX is referred to as a direction X1, and a direction opposite to the direction X1 is referred to as a direction X2. Furthermore, in the following, the direction X1 and the direction X2 may be referred to as an "axial direction" without distinction therebetween. Furthermore, a direction along a circumference having a center disposed at the axis AX may be referred to as a "circumferential direction." Furthermore, a direction perpendicular to the axis AX may be referred to as a "radial direction."

The member 110 is an annular member including an inner circumferential surface 111 having a center disposed at the axis AX. The member 110 is, for example, an outer ring of a bearing that is to be fixed to the housing of a differential. It should be noted that the member 110 needs to be a member including the inner circumferential surface 111, but it is not limited to an outer ring of a bearing.

On the other hand, the member 120 is a member including an outer circumferential surface 121 and a surface 122 each having a center disposed at the axis AX, and rotates about the axis AX. The member 120 is, for example, a flange provided in a drive shaft. The outer circumferential surface 121 is disposed inside the inner circumferential surface 111 of the member 110. The surface 122 is a surface disposed in the direction X1 from the member 110 and extending outwardly in the radial direction from an end of the outer circumferential surface 121 that is in the direction X1. Here, the surface 122 faces in the direction X2 and is a counterpart surface in contact with a side lip 12d described below. It should be noted that the member 120 needs to be a member including a surface 122, the surface 122 being configured to rotate about the axis AX, but it is not limited to a flange provided in a drive shaft. In addition, the surface 122 is not limited to a surface parallel to the radial direction, and it may be a surface inclined relative to the radial direction, or it may be a curved surface.

Thus, the gap S to be sealed by the sealing apparatus 10 is formed between the inner circumferential surface 111 of the member 110 and the outer circumferential surface 121 of the member 120. The sealing apparatus 10 prevents leakage of fluids such as lubricant from the inside of the member 110 through the gap S and prevents infiltration of foreign matter into the member 110 through the gap S.

As shown in Fig. 1, the sealing apparatus 10 includes a metal ring 11 configured to be fixed to the member 110 and an elastic body 12 fixed to the metal ring 11.

The metal ring 11 is a member configured to be fixed to the member 110 of the two members 110, 120 and having a shape of an annulus around the axis AX. The metal ring 11 is fixed to the member 110 by being fitted to the inner circumferential surface 111 of the member 110, for example. The metal ring 11 is made of metal material such as carbon steel, and is formed by press molding, etc., for example.

In an example shown in Fig. 1, as viewed in a cross section taken along a plane including the axis AX, the metal ring 11 has a bent shape. Specifically, the metal ring 11 has a first portion 11a, which extends in the axial direction along the inner circumferential surface 111, and a second portion 11b, which extends inwardly in the radial direction from an end of the first portion 11a that is in the direction X1.

The first portion 11a has a cylindrical shape and includes an outer circumferential surface that is in contact with the inner circumferential surface 111 over the entire circumference thereof. The second portion 11b has an annular shape and is connected to the end of the first portion 11a that is in the direction X1 over the entire circumference thereof. An inner diameter of the second portion 11b is greater than a diameter of the outer circumferential surface 121 of the member 120. In the example shown in Fig. 1, as viewed in the cross section taken along the plane including the axis AX, the second portion 11b has a portion that is bent or is curved. It should be noted that a shape of the second portion 11b is not limited to the example shown in Fig. 1 and may be freely selected.

The elastic body 12 is fixed to the metal ring 11 described above. The elastic body 12 is made of elastic material such as a rubber material. As the elastic material, a rubber material such as nitrile rubber (NBR), hydrogenated nitrile rubber (H-NBR), acrylic rubber (ACM), or fluorine rubber (FKM) may be given, for example. The elastic body 12 is formed by using a mold. Here, molding is performed in a state in which a part of the metal ring 11 is disposed within the mold; as a result, the elastic body 12 in a state of being fixed to the metal ring 11 by vulcanization adhesion is obtained. It should be noted that a part or all of the elastic body 12 may be made of resin material such as fluorine-based resin such as Poly Tetra Fluoro Ethylene: tetrafluoroethylene resin (PTFE)

The elastic body 12 includes a base 12a, lips 12b, 12c, and the side lip 12d. These are made of the elastic material described above to be in a single body.

The base 12a is a portion of the elastic body 12 and is an annular portion joined to the metal ring 11 over the entire circumference thereof. The base 12a is bonded to the metal ring 11 by, for example, vulcanization adhesion, etc. In the example shown in Fig. 1, the base 12a is fixed to the second portion 11b of the metal ring 11. In addition, the base 12a has a portion that is in close contact with the inner circumferential surface 111 over the entire circumference thereof.

Each of the lips 12b, 12c is a portion of the elastic body 12, and is a portion protruding from the base 12a toward the outer circumferential surface 121 of the member 120, and is in contact with the outer circumferential surface 121 over the entire circumference thereof. Here, the lip 12b protrudes from an inner peripheral edge of the base 12a in a direction inclined relative to the radial direction so as to have a component in the direction X2. On the other hand, the lip 12c protrudes from the inner peripheral edge of the base 12a in a direction inclined relative to the radial direction so as to have a component in the direction X1.

It should be noted that a shape of each of the lips 12b, 12c is not limited to the example shown in Fig. 1, and it may be freely selected. In addition, each of the lips 12b, 12c may be provided or may be omitted, as appropriate.

The side lip 12d is a portion of the elastic body 12, and is a cylindrical portion protruding from the base 12a toward the surface 122 of the member 120, and is in contact with the surface 122 over the entire circumference thereof. Thus, the side lip 12d protrudes from the base 12a and is in contact with the other member 120 of the two members 110, 120. Here, the side lip 12d protrudes from the base 12a in a direction having a component in the axial direction and a component in the radial direction so as to expand the diameter along the direction X1.

An outer peripheral surface of the side lip 12d is provided with a plurality of ribs 12d1 that are arranged spaced apart from one another in a direction of a circumference having a center disposed at the axis AX. Thus, it is possible to substantially prevent generation of abnormal noise due to stick-slip of the side lip 12d described below. This point will be described in detail below.

### 1-2. Details of Side Lip

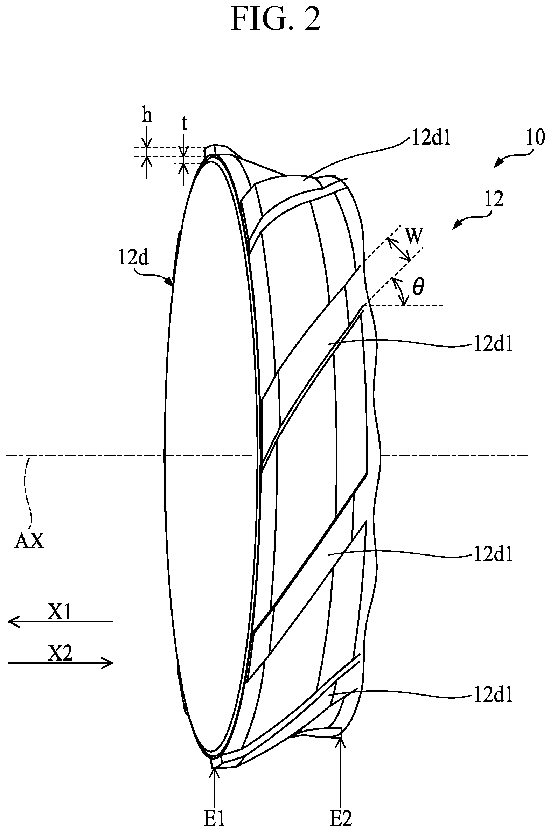

Fig. 2 is a perspective view of the side lip 12d of the sealing apparatus 10 according to the first embodiment. It should be noted that in Fig. 2, elements of the sealing apparatus 10 other than the side lip 12d are omitted.

In an example shown in Fig. 2, eight ribs 12d1 are arranged equally spaced apart from one another in the direction of the circumference. In addition, each of the plurality of ribs 12d1 is provided over an entire area of the side lip 12d that is in a direction along the axis AX. In other words, each of the plurality of ribs 12d1 extends from an end E2 of the side lip 12d that is in the direction X2 to an end E1 of the side lip 12d that is in the direction X1. Furthermore, in other words, each of the plurality of ribs 12d1 is provided to extend from the base 12a to a distal end (the end E1) of the side lip 12d.

Here, each of the plurality of ribs 12d1 extends from the base 12a toward the end E1 that is the distal end (an edge) of the side lip 12d so as to be inclined relative to the direction of the circumference having the center disposed at the axis AX. In other words, as viewed in the radial direction, each of the plurality of ribs 12d1 extends in a direction inclined at an inclination angle θ relative to the axial direction. The inclined direction from the end E2, which is a proximal end of the side lip 12d, to the end E1 is inclined toward a rotation direction of the member 120.

It should be noted that the number of ribs 12d1 provided in the side lip 12d is determined in accordance with a width W and a height h, and is not limited to the example shown in Fig. 2. However, the number is preferably 4 or more and 15 or less, and more preferably 6 or more and 12 or less, from the viewpoint of appropriately preventing generation of abnormal noise due to stick-slip of the side lip 12d described below under the following preferable inclination angles θ, widths W, and heights h.

The inclination angle θ of each of the plurality of ribs 12d1 relative to the axis AX is preferably 30° or more and 80° or less, more preferably 40° or more and 70° or less, and even more preferably 40° or more and 60° or less. As described below, due to the inclination angle θ being within such a range, it is possible to appropriately move, toward the rotation direction, a direction of friction force of the side lip 12d against the other member 120. As a result, it is possible to appropriately prevent generation of abnormal noise due to stick-slip of the side lip 12d to the surface 122 described below.

The width W of each of the plurality of ribs 12d1 is greater than the height h of each of the plurality of ribs 12d1. Thus, even when the side lip 12d is provided with the ribs 12d1, it is possible to reduce pressing reaction force caused by the ribs 12d1 of the side lip 12d against the other member 120. Thus, as described below, it is possible to reduce surface pressure caused by the side lip 12d against the other member 120 and to move, toward the rotation direction, the direction of friction force of the side lip 12d against the other member 120. As a result, it is possible to appropriately prevent generation of abnormal noise due to stick-slip of the side lip 12d to the other member 120.

Here, the width W of each of the plurality of ribs 12d1 is more preferably 2 times or more and 5 times or less the height h. In this case, it is possible to appropriately prevent generation of abnormal noise due to stick-slip of the side lip 12d described below.

Preferably, h/t is 0.5 or more and 1.5 or less, in which t is a thickness of a portion of the side lip 12d other than the plurality of ribs 12d1 and h is a height of each of the plurality of ribs 12d1. In this case, even when the side lip 12d is provided with the ribs 12d1, it is possible to reduce pressing reaction force caused by the ribs 12d1 of the side lip 12d against the other member 120. Thus, it is possible to reduce surface pressure caused by the side lip 12d against the other member 120 and to move, toward the rotation direction, the direction of friction force of the side lip 12d against the other member 120. As a result, it is possible to appropriately prevent generation of abnormal noise due to stick-slip of the side lip 12d to the other member 120.

The height h of each of the plurality of ribs 12d1 is not particularly limited, and is preferably 0.5 times or more and 1.5 times or less the thickness t of the portion of the side lip 12d other than the plurality of ribs 12d1. In this case, it is possible to appropriately prevent generation of abnormal noise due to stick-slip of the side lip 12d described below.

### 1-3. Side Lip and Counterpart Surface

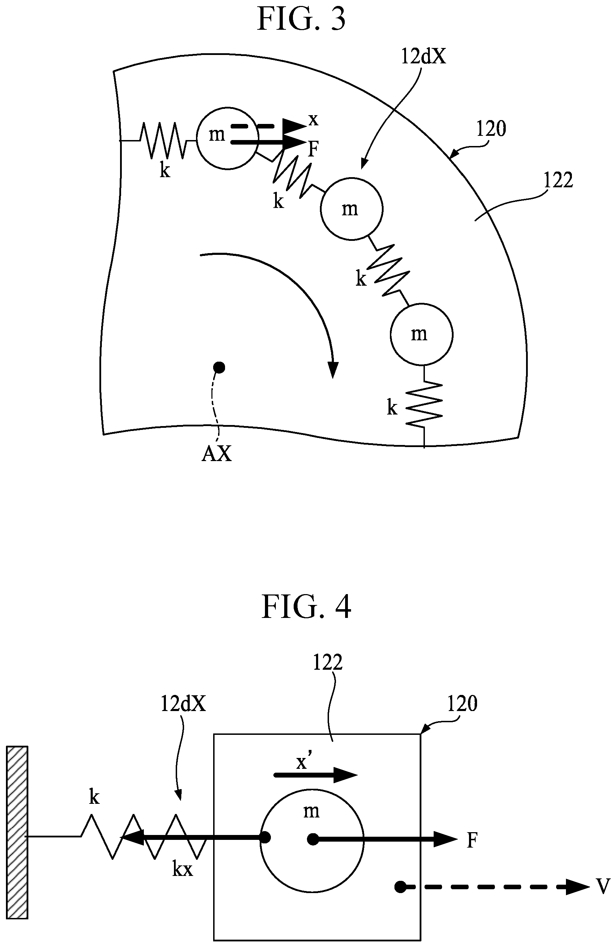

Fig. 3 is a schematic diagram explaining friction vibration of a side lip 12dX having no rib 12d1. Fig. 4 is a schematic diagram explaining a state of friction between the side lip 12dX having no rib 12d1 and the surface 122 that is a counterpart surface. The side lip 12dX has the same configuration as the side lip 12d described above, except that the ribs 12d1 are omitted. In Fig. 3, the side lip 12dX that is in contact with the surface 122 of the member 120 that rotates about the axis AX is described as a model of a single-degree-of-freedom system that has masses m and spring constants k.

As shown in Fig. 3, when the member 120 rotates about the axis AX, friction force F that is in a direction of a tangent line to a circle having a center disposed at the axis AX is generated between the side lip 12dX and the surface 122 of the member 120. Along with this, in the side lip 12dX, torsion is generated by the friction force F; thus, restoring force kx around the axis AX acts on the side lip 12dX so as to resist this torsion. Here, with the rotation of the member 120 about the axis AX, a distal end of the side lip 12dX is displaced relative to the surface 122 by an amount x of displacement. A direction of this displacement is the direction of the tangent line to the circle having the center disposed at the axis AX.

As shown in Fig. 4, a direction of a velocity x' of displacement of the distal end of the side lip 12dX relative to the surface 122 is parallel to a direction of a velocity V of rotation drive of the surface 122. Thus, a direction of the restoring force kx is opposite to the direction of the friction force F. Consequently, in the side lip 12dX, when a friction coefficient reduces with an increase in the velocity V of rotation drive, abnormal noise caused by stick-slip to the surface 122 is likely to be generated.

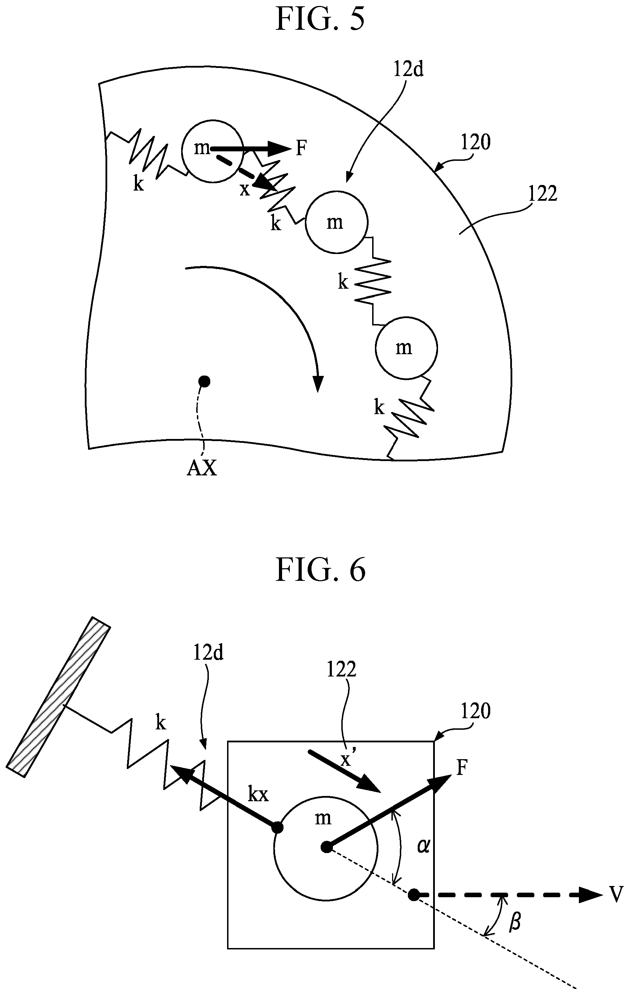

Fig. 5 is a schematic diagram explaining friction vibration of the side lip 12d with the ribs 12d1. Fig. 6 is a schematic diagram explaining a state of friction between the side lip 12d with the ribs 12d1 and the surface 122 that is a counterpart surface. In Fig. 5, the side lip 12d that is in contact with the surface 122 of the member 120 that rotates about the axis AX is described as a model of a single-degree-of-freedom system that has masses m and spring constants k.

As shown in Fig. 5, when the member 120 rotates about the axis AX, friction force F that is in a direction of a tangent line to a circle having a center disposed at the axis AX is generated between the side lip 12d and the surface 122 of the member 120. Along with this, in the side lip 12d, torsion is generated by the friction force F; thus, restoring force kx around the axis AX acts on the side lip 12d so as to resist this torsion. In addition, with the rotation of the member 120 about the axis AX, the distal end of the side lip 12d is displaced relative to the surface 122 by an amount x of displacement. A direction of this displacement, which is influenced by the ribs 12d1, is a direction that faces more inwardly than the direction of the tangent line to the circle having the center disposed at the axis AX.

As shown in Fig. 6, a direction of a velocity x' of displacement of the distal end of the side lip 12d relative to the surface 122 is a direction that faces more inwardly than a direction of a velocity V of rotation drive of the surface 122. Thus, a direction of the restoring force kx is not parallel to the direction of the friction force F, and is inclined at a misalignment angle β relative to the direction of the velocity V of rotation drive. In addition, the direction of the friction force F is inclined at an angle α relative to the direction of the restoring force kx. Thus, it is possible to reduce effective friction force of the side lip 12d to the surface 122. As a result, in the side lip 12d, when a friction coefficient reduces with an increase in the velocity V of rotation drive, abnormal noise caused by stick-slip to the surface 122 is difficult to be generated.

As described above, in the sealing apparatus 10, by the outer peripheral surface of the side lip 12d being provided with the plurality of ribs 12d1 that are arranged spaced apart from one another in the direction of the circumference having the center configured to be disposed at the axis AX, a degree of rigidity of each of a plurality of portions of the side lip 12d that are in a direction of a circumference of the side lip 12d is locally increased; thus, it is possible to move, toward the rotation direction, a direction of friction force of the side lip 12d against the other member 120. As a result, it is possible to substantially prevent generation of abnormal noise due to stick-slip of the side lip 12d to the other member 120, without changing a structure so as to cause the two members 110, 120 to be eccentric, etc.

Here, as described above, each of the plurality of ribs 12d1 extends from the base 12a toward the end E1 that is the distal end of the side lip 12d so as to be inclined relative to the direction of the circumference having the center disposed at the axis AX. Thus, it is possible to reduce pressing reaction force caused by the ribs 12d1 of the side lip 12d against the other member 120. Thus, even when the side lip 12d is provided with the ribs 12d1, it is possible to reduce surface pressure caused by the side lip 12d against the other member 120 and to move, toward the rotation direction, the direction of friction force of the side lip 12d against the other member 120. As a result, it is possible to appropriately prevent generation of abnormal noise due to stick-slip of the side lip 12d to the other member 120.

In addition, as described above, each of the plurality of ribs 12d1 is provided over an entire area of the side lip 12d that is in the direction along the axis AX. Thus, it is possible to appropriately move, toward the rotation direction, the direction of friction force of the side lip 12d against the other member 120.

### 2. Second Embodiment

A second embodiment according to this disclosure will now be described below. In the configuration described below, elements relating to actions and functions that are the same as those in the embodiment described above will be denoted by the same reference signs used in the description of the embodiment described above, and detailed description thereof will be omitted as appropriate.

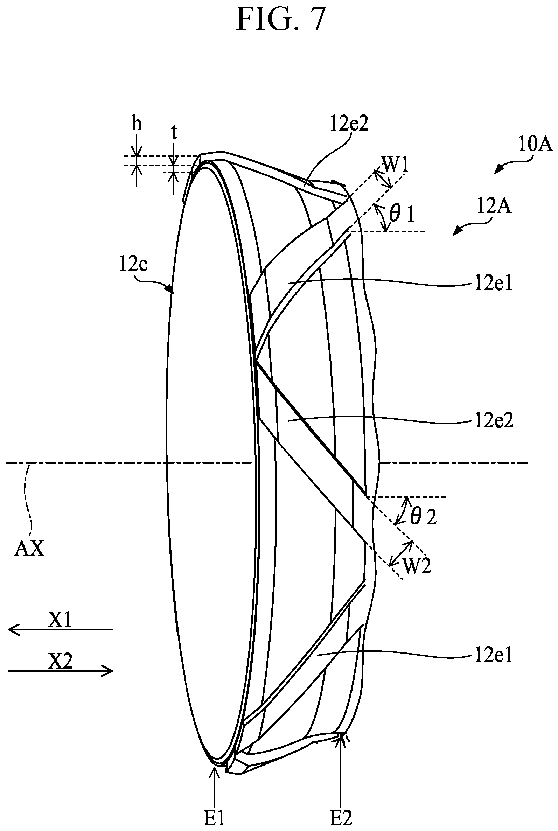

Fig. 7 is a perspective view of a side lip 12e of a sealing apparatus 10A according to the second embodiment. The sealing apparatus 10A has the same configuration as the sealing apparatus 10 according to the first embodiment, except that an elastic body 12A is included in place of the elastic body 12 according to the first embodiment. The elastic body 12A has the same configuration as the elastic body 12 according to the first embodiment, except that the side lip 12e is included in place of the side lip 12d according to the first embodiment. It should be noted that in Fig. 7, elements of the sealing apparatus 10A other than the side lip 12e are omitted.

The side lip 12e has the same configuration as the side lip 12d according to the first embodiment, except that in place of the plurality of ribs 12d1 according to the first embodiment, a plurality of first ribs 12e1 and a plurality of second ribs 12e2 are included as a plurality of ribs.

In an example shown in Fig. 7, three first ribs 12e1 are arranged equally spaced apart from one another in the circumferential direction and three second ribs 12e2 are arranged equally spaced apart from one another in the circumferential direction such that the first ribs 12e1 and the second ribs 12e2 are arranged alternately in the circumferential direction. In addition, each of the plurality of first ribs 12e1 is provided in an entire area of the side lip 12e along the axial direction. Similarly, each of the plurality of second ribs 12e2 is provided in an entire area of the side lip 12e along the axial direction.

Here, as viewed in the radial direction, each of the plurality of first ribs 12e1 extends in a direction inclined at an inclination angle θ1 relative to the axial direction. In contrast, as viewed in the radial direction, each of the plurality of second ribs 12e2 extends in a direction inclined at an inclination angle θ2 relative to the axial direction. In other words, the first ribs 12e1 and the second ribs 12e2 are each inclined so as to extend toward a direction among directions that are opposite to each other and are along the circumferential direction.

It should be noted that the number of each of the first ribs 12e1 and the second ribs 12e2 provided in the side lip 12e is determined in accordance with a width W and a height h, and is not limited to the example shown in Fig. 7. However, the number described above is preferably 2 or more and 8 or less, and more preferably 2 or more and 6 or less, from the viewpoint of appropriately preventing generation of abnormal noise due to stick-slip of the side lip 12e under the following appropriate inclination angles θ1, θ2. In addition, the number of first ribs 12e1 and the number of second ribs 12e2 may differ, but are preferably the same from the viewpoint of appropriately preventing generation of abnormal noise due to stick-slip of the side lip 12e.

Thus, each of the plurality of first ribs 12e1 extends from the base 12a toward the distal end of the side lip 12d so as to be inclined toward a direction that is along the direction of the circumference having the center configured to be disposed at the axis Ax. In contrast, each of the plurality of second ribs 12e2 extends from the base 12a toward the distal end of the side lip 12d so as to be inclined toward an opposite direction that is along the direction of the circumference having the center configured to be disposed at the axis Ax. By the plurality of first ribs 12e1 and the plurality of second ribs 12e2 described above being used, it is possible to substantially prevent generation of abnormal noise due to stick-slip of the side lip 12e relative to the other member 120, regardless of direction of relative rotation of the two members 110, 120.

The inclination angle θ1 of each of the plurality of first ribs 12e1 relative to the axis AX is preferably 30° or more and 80° or less. Similarly, the inclination angle θ2 of each of the plurality of second ribs 12e2 relative to the axis AX is preferably 30° or more and 80° or less. By the inclination angles θ1, θ2 being within such a range, it is possible to appropriately move, toward the rotation direction, a direction of friction force of the side lip 12e against the other member 120. It should be noted that the inclination angles θ1, θ2 may differ, but are preferably the same from the viewpoint of appropriately preventing generation of abnormal noise due to stick-slip of the side lip 12e described below.

According to the second embodiment described above, it is possible to substantially prevent abnormal noise due to stick-slip of a side lip.

### 3. Modifications

Each of the embodiments described above can be variously modified. Specific modifications that may be applied to each of the embodiments described above are described below. Two or more modifications freely selected from the following modifications may be combined as long as no conflict arises from such a combination.

### 3-1. Modification 1

In the embodiments described above, a configuration is described in which, as viewed in the radial direction, ribs provided in a side lip extend in a direction inclined relative to the axial direction; however, this disclosure is not limited to this configuration, and the ribs may extend in a direction parallel to the axial direction as viewed in the radial direction.

### 3-2. Modification 2

In the second embodiment described above, a configuration is described in which the plurality of first ribs 12e1 and the plurality of second ribs 12e2 do not intersect with each other; however, this disclosure is not limited to this configuration, and the plurality of first ribs 12e1 and the plurality of second ribs 12e2 may intersect with each other.

### 3-3. Modification 3

In the embodiments described above, a configuration is described in which widths and thicknesses of a plurality of ribs are each the same; however, this disclosure is not limited to this configuration, and the widths of the plurality of ribs may differ and the thicknesses of the plurality of ribs may differ.

### 3-4. Modification 4

In the embodiments described above, a configuration is described in which a plurality of ribs are arranged equally spaced apart from one another in the circumferential direction; however, this disclosure is not limited to this configuration, and the plurality of ribs need not be arranged equally spaced apart from one another in the circumferential direction.

### 3-5. Modification 5

In the embodiments described above, a configuration is described in which a side lip is provided with a plurality of ribs arranged in the circumferential direction such that a degree of rigidity of each of a plurality of portions of the side lip that are in a direction of a circumference of the side lip is locally increased; however, this disclosure is not limited to this configuration, and the plurality of portions of the side lip that are in the direction of the circumference of the side lip are required to locally differ in degree of rigidity. For example, the plurality of portions of the side lip that are in the direction of the circumference of the side lip can locally differ in degree of rigidity by grooves being provided in the plurality of portions of the side lip that are in the direction of the circumference or by the plurality of portions being made of materials having different elastic moduli.

### 4. Supplemental Notes

The following configurations are derivable from the embodiments and the modifications described above, for example.

A sealing apparatus according to a first aspect, which is a preferred example of this disclosure, is a sealing apparatus for sealing a gap between two members configured to rotate relative to each other about an axis, the sealing apparatus comprising a metal ring configured to be fixed to one member of the two members and having a shape of an annulus configured to be disposed around the axis and an elastic body supported by the metal ring and having a shape of an annulus configured to be disposed around the axis, wherein the elastic body includes an annular base joined to the metal ring and a cylindrical side lip protruding from the base and configured to be in contact with another member of the two members, and wherein an outer peripheral surface of the side lip is provided with a plurality of ribs that are arranged spaced apart from each other in a direction of a circumference having a center configured to be disposed at the axis.

According to the first aspect described above, the outer peripheral surface of the side lip is provided with the plurality of ribs that are arranged spaced apart from each other in the direction of the circumference having the center configured to be disposed at the axis; thus, it is possible to move, toward the rotation direction, a direction of friction force of the side lip against the other member. As a result, it is possible to substantially prevent generation of abnormal noise due to stick-slip of the side lip to the other member, without changing a structure so as to cause the two members to become eccentric, etc.

In a second aspect that is a preferred example of the first aspect, each of the plurality of ribs extends from the base toward a distal end of the side lip so as to be inclined relative to the direction of the circumference having the center configured to be disposed at the axis. According to the second aspect described above, it is possible to reduce pressing reaction force caused by the ribs of the side lip against the other member. Thus, even when the side lip is provided with the ribs, it is possible to reduce surface pressure caused by the side lip against the other member and to move, toward the rotation direction, the direction of friction force of the side lip against the other member. As a result, it is possible to appropriately prevent generation of abnormal noise due to stick-slip of the side lip to the other member.

In a third aspect that is a preferred example of the second aspect, the plurality of ribs includes a plurality of first ribs extending from the base toward the distal end of the side lip so as to be inclined toward a direction that is along the direction of the circumference having the center configured to be disposed at the axis, and a plurality of second ribs extending from the base toward the distal end of the side lip so as to be inclined toward an opposite direction that is along the direction of the circumference having the center configured to be disposed at the axis. According to the third aspect described above, it is possible to substantially prevent generation of abnormal noise due to stick-slip of the side lip to the other member, regardless of direction of relative rotation of the two members.

In a fourth aspect that is a preferred example of the second aspect or the third aspect, an inclination angle of each of the plurality of ribs relative to the axis is 30° or more and 80° or less. According to the fourth aspect described above, it is possible to appropriately move, toward the rotation direction, a direction of friction force of the side lip against the other member.

In a fifth aspect that is a preferred example of any one of the first aspect to the fourth aspect, each of the plurality of ribs is provided over an entire area of the side that is in a direction along the axis. According to the fifth aspect described above, it is possible to appropriately move, toward the rotation direction, a direction of friction force of the side lip against the other member.

In the sixth aspect that is a preferred example of any of the first aspect to the fifth aspect, a width of each of the plurality of ribs is greater than a height of each of the plurality of ribs. According to the sixth aspect described above, even when the side lip is provided with the ribs, it is possible to reduce pressing reaction force caused by the ribs of the side lip against the other member. Thus, it is possible to reduce surface pressure caused by the side lip against the other member and to move, toward the rotation direction, the direction of friction force of the side lip against the other member. As a result, it is possible to appropriately prevent generation of abnormal noise due to stick-slip of the side lip to the other member.

In a seventh aspect that is a preferred example of any one of the first aspect to the sixth aspect, h/t is 0.5 or more and 1.5 or less, in which t is a thickness of a portion of the side lip other than the plurality of ribs, and h is a height of each of the plurality of ribs. According to the seventh aspect described above, even when the side lip is provided with the ribs, it is possible to reduce pressing reaction force caused by the ribs of the side lip against the other member. Thus, it is possible to reduce surface pressure caused by the side lip against the other member and to move, toward the rotation direction, the direction of friction force of the side lip against the other member. As a result, it is possible to appropriately prevent generation of abnormal noise due to stick-slip of the side lip to the other member.

### Examples

Specific examples of the present invention will be described below. It should be noted that the present invention is not limited to the following examples.

### A. Production of Sealing Apparatus

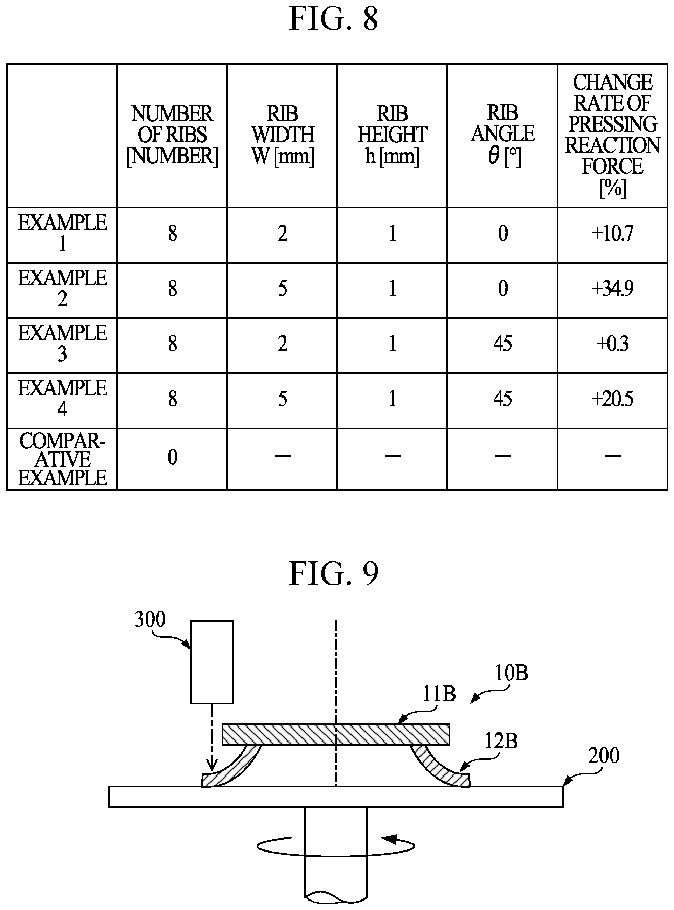

Fig. 8 is a diagram showing each condition for examples 1 to 4 and a comparative example. Sealing apparatuses each having the side lip 12d shown in Fig. 2 were produced under the respective conditions shown in Fig. 8.

In Fig. 8, "number of ribs" denotes the number of ribs 12d1, "rib width" denotes a width W of a rib 12d1, "rib height" denotes a height h of the rib 12d1, "rib angle" denotes an inclination angle θ of the rib 12d1, and "change rate of pressing reaction force" denotes a ratio of reaction force, which occurs when a surface 210 described below is pressed, to a reference, which is that of the comparative example.

Specifically, in the example 1, the number of ribs 12d1 was eight, the width W of the rib 12d1 was 2 mm, the height h of the rib 12d1 was 1 mm, and the inclination angle θ of the rib 12d1 was 0°. In the example 1, the rate of change of pressing reaction force was +10.7%.

In the example 2, a sealing apparatus was produced in the same manner as the example 1, except that the width W of the rib 12d1 was 5 mm. In the example 2, the rate of change of pressing reaction force was +34.9%.

In the example 3, a sealing apparatus was produced in the same manner as the example 1, except that the inclination angle θ was 45°. In the example 3, the rate of change of pressing reaction force was +0.3%.

In the example 4, a sealing apparatus was produced in the same manner as in the example 2, except that the inclination angle θ was 45°. In other words, in the example 4, a sealing apparatus was produced in the same manner as the example 1, except that the width W of the rib 12d1 was 5 mm and the inclination angle θ was 45°. In the example 4, the rate of change of pressing reaction force was +20.5%.

In the comparative example, a sealing apparatus was produced in the same manner as in the example 1, except that the ribs 12d1 were omitted.

### B. Abnormal Noise Tests

Fig. 9 is a schematic diagram showing an apparatus for abnormal noise tests for side lips 12d. As shown in Fig. 9, the apparatus includes a rotatable plate 200 and a laser vibrometer 300. The rotatable plate 200 includes the surface 210 perpendicular to the axis AX and rotates about the axis AX. A distal end of a side lip in each of the examples or in the comparative example is in contact with the surface 210. The laser vibrometer 300 measures vibrations of the side lip.

In the abnormal noise tests, for each of side lips in the examples 1 to 4 and the comparative example, under the following conditions, vibrations were measured by the laser vibrometer 300, and presence or absence of occurrence of abnormal noise (machine noise) was determined by listening.
Material of the surface 210: SPCC
Surface roughness Ra of the surface 210: 0.36 µm
Velocity of rotation of the surface 210: 50 rpm to 100 rpm
Properties of the surface 210: Dry

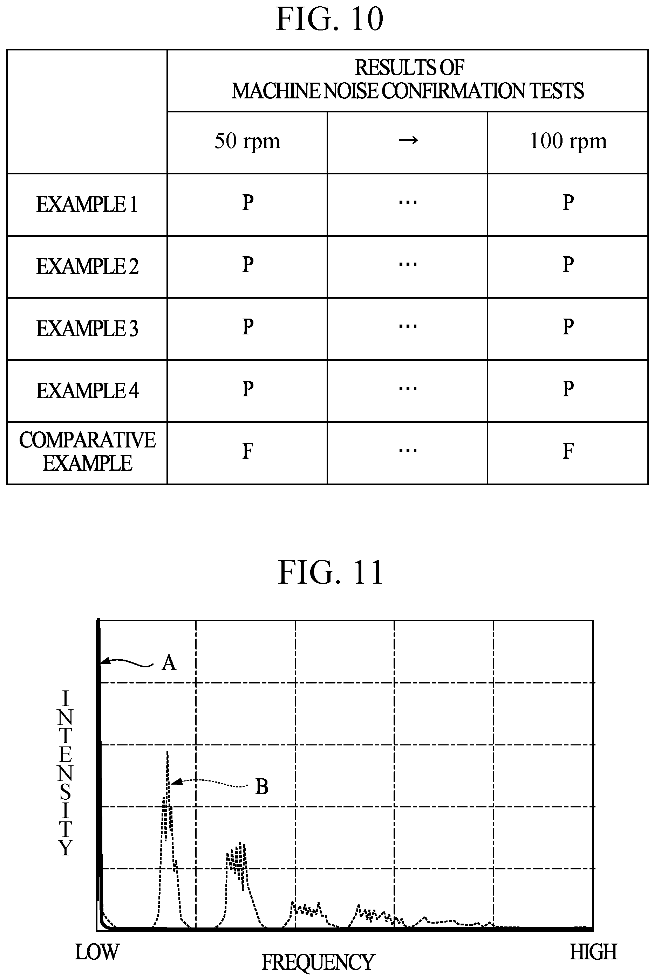

Fig. 10 a diagram showing results of machine noise confirmation tests for the examples 1 to 4 and the comparative example. In Fig. 10, "P" denotes that there was no occurrence of abnormal noise, and "F" denotes that there was occurrence of abnormal noise. As shown in Fig. 10, in none of the examples 1 to 4, there was occurrence of abnormal noise in a state in which the velocity of rotation of the surface 210 was within a range of 50 rpm to 100 rpm. In contrast, in the comparative example, there was occurrence of abnormal noise in a state in which the velocity of rotation of the surface 210 was within the range of 50 rpm to 100 rpm.

Fig. 11 is a diagram showing vibration frequency spectra of side lips in the example 4 and the comparative example. In Fig. 11, a vibration frequency spectrum A in the example 4 is shown in solid line, and a vibration frequency spectrum B in the comparative example is shown in dashed line.

As shown in Fig. 11, in the example 4, although vibration occurred at an extremely low frequency, vibration hardly occurred over a wide range of frequencies. In contrast, in the comparative example, vibration occurred over a wide range of frequencies.

### Description of Reference Signs

10... sealing apparatus, 10A... sealing apparatus, 11... metal ring, 11a... first portion, 11b... second portion, 12... elastic body, 12A... elastic body, 12a... base, 12b... lip, 12c... lip, 12d... side lip, 12d1... rib, 12dX... side lip, 12e... side lip, 12e1... first rib, 12e2... second rib, 110... member, 111... inner circumferential surface, 120... member, 121... outer circumferential surface, 122... surface, 200... rotatable plate, 210... surface, 300... laser vibrometer, A... vibration frequency spectrum, AX... axis, B... vibration frequency spectrum, E1... end, E2... end, F... friction force, S... gap, V... velocity of rotation drive, W... width, h... height, k... spring constant, kx... restoring force, m... mass, t... thickness, x... amount of displacement, x'... velocity of displacement, α... angle, β... misalignment angle, θ... inclination angle, θ1... inclination angle, θ2... inclination angle.

## Claims

1. A sealing apparatus for sealing a gap between two members configured to rotate relative to each other about an axis, the sealing apparatus comprising:
a metal ring configured to be fixed to one member of the two members and having a shape of an annulus configured to be disposed around the axis; and
an elastic body supported by the metal ring and having a shape of an annulus configured to be disposed around the axis,
wherein the elastic body includes:
an annular base joined to the metal ring; and
a cylindrical side lip protruding from the base and configured to be in contact with another member of the two members, and
wherein an outer peripheral surface of the side lip is provided with a plurality of ribs that are arranged spaced apart from each other in a direction of a circumference having a center configured to be disposed at the axis.

2. The sealing apparatus according to claim 1, wherein each of the plurality of ribs extends from the base toward a distal end of the side lip so as to be inclined relative to the direction of the circumference.

3. The sealing apparatus according to claim 2, wherein the plurality of ribs includes:
a plurality of first ribs extending from the base toward the distal end of the side lip so as to be inclined toward a direction that is along the direction of the circumference having the center configured to be disposed at the axis; and
a plurality of second ribs extending from the base toward the distal end of the side lip so as to be inclined toward an opposite direction that is along the direction of the circumference having the center configured to be disposed at the axis.

4. The sealing apparatus according to claim 2, wherein an inclination angle of each of the plurality of ribs relative to the axis is 30° or more and 80° or less.

5. The sealing apparatus according to claim 2, wherein each of the plurality of ribs is provided to extend from the base to the distal end of the side lip.

6. The sealing apparatus according to claim 1, wherein a width of each of the plurality of ribs is greater than a height of each of the plurality of ribs.

7. The sealing apparatus according to claim 1, wherein h/t is 0.5 or more and 1.5 or less, in which t is a thickness of a portion of the side lip other than the plurality of ribs, and h is a height of each of the plurality of ribs.
